# EUROPÄISCHE PATENTSCHRIFT

(11) **EP 3 606 697 B1**
(45) Veröffentlichungstag und Bekanntmachung des Hinweises auf die Patenterteilung: **27.04.2022**
(21) Anmeldenummer: 18728008.6
(22) Anmeldetag: 29.03.2018
(51) Int. Cl.: B23K 26/08, B25J 19/00, H01S 3/02

(54) **BEARBEITUNGSROBOTER UND VERFAHREN ZUR BEARBEITUNG VON WERKSTÜCKEN MIT EINEM LASERSTRAHL, MIT EINEM AN EINEM ARM DES ROBOTERS INTEGRIERTEN BEARBEITUNGSLASER,**
MACHINING ROBOT FOR AND METHOD OF MACHINING WORKPIECES USING A LASER BEAM, COMPRISING A MACHINING LASER INTEGRATED INTO A ROBOT ARM
ROBOT ET MÉTHODE D'USINAGE DE PIÈCES PAR UN FAISCEAU LASER ET POURVU D'UN LASER D'USINAGE INTÉGRÉ AU BRAS DU ROBOT

(30) Priorität: 03.04.2017 DE 102017003199
(43) Veröffentlichungstag der Anmeldung: 12.02.2020
(73) Patentinhaber: Robot-Technology GmbH, 63762 Grossostheim (DE)
(72) Erfinder: MAIER, Stefan, 63762 Grossostheim (DE)
(74) Vertreter: Nitz, Astrid
(86) Internationale Anmeldenummer: PCT/DE2018/000081
(87) Internationale Veröffentlichungsnummer: WO 2018/184615

(56) Entgegenhaltungen:
- EP-A1- 1 759 818
- DE-U1- 20 021 369
- US-A1- 2011 231 035
- US-A1- 2012 230 356

## Beschreibung

Die Erfindung betrifft einen Bearbeitungsroboter zur Bearbeitung von Werkstücken mit einem Laserstrahl nach dem Oberbegriff von Anspruch 1 und ein Verfahren zur Bearbeitung eines Werkstücks unter Verwendung eines Bearbeitungsroboters nach dem Oberbegriff von Anspruch 9 (siehe z.B. DE200 231 69 U).

Bekannt ist es, Bearbeitungsroboter mit Bearbeitungsachsen und beweglichen Armen auszustatten, die einen Laserstrahl zum Anfang eines Bearbeitungskopfes führen. Diese Elemente sind sehr stabil, bedingen aber zugleich eine große Vorrichtung und ein hohes Gewicht, wenn ein zuverlässiger, schnell zu erreichender großer Bearbeitungsbereich verlangt wird.

EP 1759818 A1 offenbart einen Roboter mit einem integrierten Laser, wobei die Einrichtung einen großen Schwenkbereich aufweist.

US 2021230356 A1 offenbart ein skalierbares Lasersystem in einem Gehäuse.

DE 4125480 A1 offenbart Achsverbindungsmodule für die Roboter.

Aufgabe der vorliegenden Erfindung ist es, einen einfachen und sicheren Bearbeitungsroboter bereitzustellen, der zugleich die Nachteile des Stands der Technik vermeidet.

Die Aufgabe wird gelöst durch einen Bearbeitungsroboter zur Bearbeitung von Werkstücken mit einem Laserstrahl entsprechend Anspruch 1, d.h. ein sechsachsiger Bearbeitungsroboter, wobei der Laserstrahl über Umlenkungsmittel im Wesentlichen entlang einer Längsachse des Bearbeitungsroboters über ein angelenktes Kopplungsmittel in einen Eintritt in eine mittlere Bearbeitungsroboterachse bis zu einem Bearbeitungsroboterkopf mit einem Laserbearbeitungswerkzeug, insbesondere mit einem Düsenmittel um einen Ausgangsbereich des Laserstrahls herum, zu leiten ist, wobei der Bearbeitungslaser zur Erzeugung des Laserstrahls in einem Bearbeitungsroboterarm der mittleren Bearbeitungsroboterachse integriert ist, der im Wesentlichen ein Carbongehäuse umfasst, insbesondere daraus besteht, wobei ein vollständiges oberes Außengehäuse eines Roboterarms aus Carbon mit entsprechenden Anbindungsstellen aus Aluminium vorgesehen ist, wobei der Bearbeitungslaser eine Laserleistung zwischen etwa 60 W und etwa 300 W aufweist, insbesondere dass der Bearbeitungslaser ein CO2 Laser ist.

Bei dem Laserbearbeitungsroboter ist das Gehäuse gemäß der Erfindung ein vollständiges oberes Gehäuse aus Carbon mit entsprechenden Anbindungsstellen aus Aluminium. Der Laserbearbeitungsroboter hat gemäß der Erfindung sechs Achsen. Das vollständige obere Gehäuse entspricht gemäß der Erfindung einem Außengehäuse des Armes.

Das Carbongehäuse umfasst vorteilhaft eine leichte und stabile Carbonfasercomposition.

Bei der erfindungsgemäßen Anordnung können beispielsweise die Bewegungen eines bekannten Roboters verwendet werden und zugleich die Laserstrahlfunktion integriert abgerufen und ein großer Arbeitsbereich erreicht werden.

Ein Laserbearbeitungswerkzeug, insbesondere ein Scanner, kann bei diesem erfindungsgemäßen Laserbearbeitungsroboter hinter einer sechsten Achse im Bereich der fünften Achse, meist eine Drehachse, angeordnet sein. Hierdurch kann nach vorne hin die Werkzeuglänge des Bearbeitungsroboters deutlich verkürzt werden, was beim Umorientieren beträchtliche Geschwindigkeits- und Genauigkeitsvorteile hat.

Die Anbindung des Lasergehäuses ist seitlich zur Anlenkung an eine entsprechende Drehachse möglich. Durch die Bearbeitungsrobotervariante mit der innenliegenden Durchführung des Laserstrahls in der vierten und sechsten Achse kann die Strahlführung mit geringem Aufwand realisiert werden.

Vorteilhaft ist es, wenn der Bearbeitungsroboterarm mit dem Bearbeitungslaser in eine dritte oder vierte Bearbeitungsroboterachse integriert ist.

Vorteilhaft ist es, wenn der Eintritt des Kopplungsmittels an einer Seite der mittleren Bearbeitungsroboterachse so angeordnet ist, dass das Kopplungsmittel durch die Bewegung des Bearbeitungsroboters nur eine geringe Bewegung erfährt.

Vorteilhaft ist es, wenn der Eintritt des Kopplungsmittels nahe an dem Beginn der Bearbeitungsroboterachse angeordnet ist, insbesondere in einem Ellbogenbereich eines Knickarmroboters.

Vorteilhaft ist es, wenn an dem laserseitigen Ende des Kopplungsmittels ein Spiegel/- ein Spiegelpaar und an dem achsenseitigen Ende des Kopplungsmittels ein Spiegel/ein Spiegelpaar vorgesehen ist.

Vorteilhaft ist es, wenn im Kopfbereich des Bearbeitungsroboters ein Scanner, insbesondere Hochleistungsscanner eingesetzt ist.

Vorteilhaft ist es, wenn der Bearbeitungsroboter ein Gewicht von ungefähr 300 kg aufweist, wobei der Laser insbesondere ein Gewicht von etwa 32 kg aufweist und/oder dass der Bearbeitungsroboter ein großes Verhältnis von Arbeitsbereichslänge zu Standfläche, insbesondere etwa 3 zu 1, aufweist. Die vorliegende Erfindung ermöglicht somit ein sehr gutes Arbeitsbereichslägenverhältnis zu Standflächengröße, besonders bei leichten Robotern von ungefähr 300 kg.

Vorteilhaft ist es, wenn ein Trichtermittel für die Absaugung im vorderen Bereich des Bearbeitungsroboterkopfes vorgesehen ist. Durch den Trichter ist eine Absaugung im vorderen Bereich möglich. Hierdurch kann der Trichter bei der Roboterbewegung mitgeführt werden und es kann eine einfachere Vorrichtungsgestaltung erfolgen. Vorteilhaft ist es, wenn eine Wechseleinrichtung für das Düsenmittel mit einem durchfahrenden System am Bearbeitungsroboterkopf vorgesehen ist und/oder das Düsenmittel drehbar eingerichtet ist.

Es kann vorteilhaft eine Düsenmittelwechseleinrichtung mit einem durchfahrenden System realisiert werden, wobei das Düsenmittel in einer Aufnahme festgehalten und beispielsweise durch mindestens einen, insbesondere zwei, pneumatische Zylinder indexiert wird. Die Indexierung kann einmal von rechts und einmal von links erfolgen. Der Bearbeitungsroboter kann dann zum Aufnehmen die Station z. B. von links anfahren und zum Ablegen von rechts. Hierdurch ist nur ein einmaliges Durchfahren des Bearbeitungsroboters notwendig, da das Düsenmittel über eine gefederte Kugelzentrierung aufgenommen wird, wodurch Taktzeit gespart werden kann.

Weiterhin ist eine Drehung einer Luftdüse vorteilhaft einrichtbar. Hierdurch kann prozessabhängig eine gezieltere Abluftbeseitigung durch den Luftstrahl realisiert werden.

Die Aufgabe wird ebenfalls gelöst durch ein Verfahren zur Bearbeitung eines Werkstücks unter Verwendung eines Bearbeitungsroboters zur Bearbeitung von Werkstücken mit einem Laserstrahl entsprechend Anspruch 9, d.h. Verwendung eines sechsachsigen Bearbeitungsroboters, wobei der Laserstrahl insbesondere über Umlenkungsmittel im Wesentlichen entlang einer Längsachse des Bearbeitungsroboters über ein angelenktes Kopplungsmittel in einen Eintritt in eine mittlere Bearbeitungsroboterachse bis zu einem Bearbeitungsroboterkopf mit einem Laserbearbeitungswerkzeug, insbesondere mit einem Düsenmittel um einen Ausgangsbereich des Laserstrahls herum, geleitet wird, wobei der Bearbeitungslaser zur Erzeugung des Laserstrahls in einem Bearbeitungsroboterarm der mittleren Bearbeitungsroboterachse integriert ist, der im Wesentlichen ein Carbongehäuse umfasst, insbesondere daraus besteht, insbesondere unter Verwendung einer der Vorrichtungen nach Anspruch 1 bis 9.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind.

Es zeigen:
- Fig. 1: einen erfindungsgemäßen Bearbeitungsroboter in perspektivischer Darstellung,
- Fig. 2: einen erfindungsgemäßen Bearbeitungsroboter in perspektivischer Darstellung in Teildarstellung und
- Fig. 3: einen erfindungsgemäßen Bearbeitungsroboter in perspektivischer Darstellung in Teildarstellung.

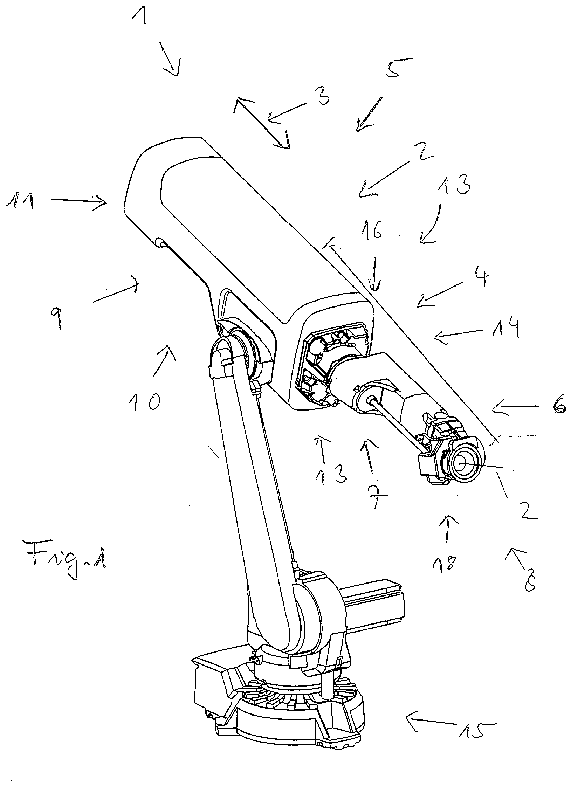

Fig. 1 zeigt einen erfindungsgemäßen Bearbeitungsroboter 1 in perspektivischer

Darstellung, zur Bearbeitung von Werkstücken mit einem Laserstrahl, gemäß der Erfindung ein sechsachsiger Bearbeitungsroboter, wobei der Laserstrahl 2 über Umlenkungsmittel im Wesentlichen entlang einer Längsachse 3 des Bearbeitungsroboters 1 über ein angelenktes Kopplungsmittel 14 in einen Eintritt 4 in eine mittlere Bearbeitungsroboterachse 5 bis zu einem Bearbeitungsroboterkopf 6, insbesondere mit einem Düsenmittel 7 um einen Ausgangsbereich 8 des Laserstrahls 2 herum, zu leiten ist, wobei der Bearbeitungslaser 9 zur Erzeugung des Laserstrahls 2 in einem Bearbeitungsroboterarm 10 der mittleren Bearbeitungsroboterachse 5 integriert ist, der im Wesentlichen ein Carbongehäuse 11 umfasst, insbesondere daraus besteht. Im Bearbeitungsroboterkopfbereich 6 des Bearbeitungsroboters 9 ist ein Scanner 18, insbesondere Hochleistungsscanner eingesetzt.

Der Eintritt 4 des Kopplungsmittels 3 an einer Seite 7 der mittleren Bearbeitungsroboterachse 5 ist so angeordnet, dass das Kopplungsmittel 14 durch die Bewegung des Bearbeitungsroboterarms 10 nur eine geringe Bewegung erfährt.

Ein Verhältnis Arbeitslänge 16 zu Standbereich 15 ist sehr groß ausgebildet, was zu einer guten Erreichbarkeit von differenzierten und entfernten Werkstückstrukturen führt.

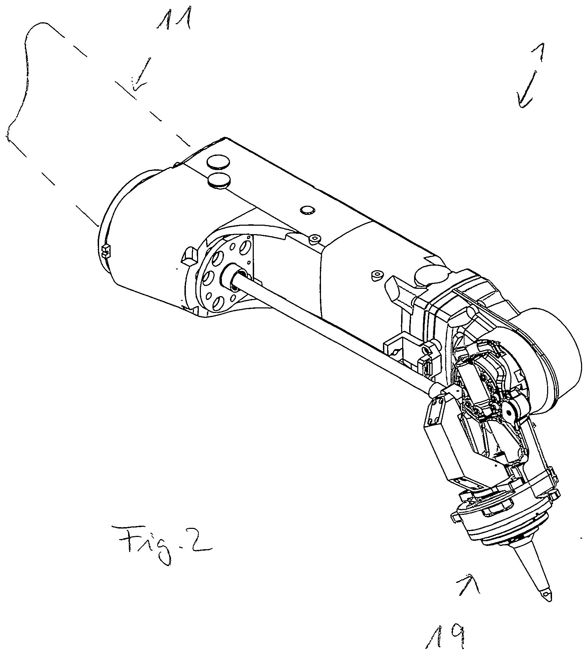

Fig. 2 zeigt einen erfindungsgemäßen Bearbeitungsroboter 1 in perspektivischer Darstellung in Teildarstellung, wobei eine Wechseleinrichtung (nicht dargestellt) für das Düsenmittel 19 mit einem durchfahrenden System am Bearbeitungsroboterkopf 6 vorgesehen sein kann und/oder das Düsenmittel 19 drehbar eingerichtet ist.

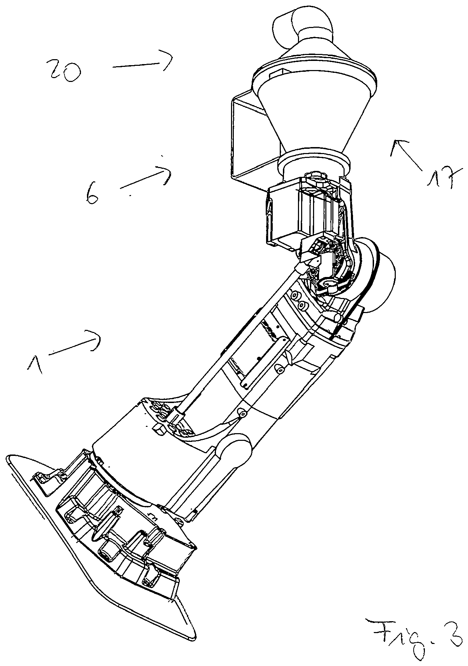

Fig. 3 zeigt einen erfindungsgemäßen Bearbeitungsroboter 1 in perspektivischer Darstellung in Teildarstellung, wobei ein Trichtermittel 17 für die Absaugung im vorderen Bereich 20 des Bearbeitungsroboterkopfes 6 vorgesehen ist

### BEZUGSZEICHENLISTE

- 1: Bearbeitungsroboter
- 2: Laserstrahl
- 3: Längsachse
- 4: Eintritt
- 5: mittlere Bearbeitungsroboterachse
- 6: Bearbeitungsroboterkopf
- 7: Seite
- 8: Ausgangsbereich
- 9: Bearbeitungslaser
- 10: Bearbeitungsroboterarm
- 11: Carbongehäuse
- 13: laserseitiges Ende
- 14: Kopplungsmittel
- 15: Standbereich
- 16: Arbeitslänge
- 17: Trichtermittel
- 18: Scanner
- 19: Düsenmittel
- 20: vorderer Bereich

## Patentansprüche

1. Sechsachsiger Bearbeitungsroboter (1) zur Bearbeitung von Werkstücken mit einem Laserstrahl, mit Umlenkungsmittel, einem Kopplungsmittel (14), einem Bearbeitungsroboterkopf (6), einem Laserbearbeitungswerkzeug, insbesondere mit einem Düsenmittel (7), und einem Bearbeitungslaser, insbesondere eine CO2 Bearbeitungslaser, zur Erzeugung eines Laserstrahls (2), wobei die Laserleistung zwischen 60 W und 300 W ist, wobei der Laserstrahl (2) über das Umlenkungsmittel im Wesentlichen entlang einer Längsachse (3) des Bearbeitungsroboters (1) über das angelenkte Kopplungsmittel (14) in einen Eintritt (4) in eine mittlere Bearbeitungsroboterachse (5) bis zu dem Bearbeitungsroboterkopf (6) mit dem Laserbearbeitungswerkzeug um einen Ausgangsbereich (8) des Laserstrahls (2) herum, zu leiten ist,
**dadurch gekennzeichnet, dass**
der Bearbeitungslaser (9) zur Erzeugung des Laserstrahls (2) in einem Bearbeitungsroboterarm (10) der mittleren Bearbeitungsroboterachse (5) integriert ist, der im Wesentlichen ein Carbongehäuse (11) umfasst, insbesondere daraus besteht, wobei das Carbongehäuse (11) ein vollständiges oberes Außengehäuse (11) des Roboterarmes (10) aus Carbon mit entsprechenden Anbindungsstellen aus Aluminium

2. Bearbeitungsroboter nach Anspruch 1, **dadurch gekennzeichnet, dass** der Bearbeitungsroboterarm (10) mit dem Bearbeitungslaser (9) in eine dritte oder vierte Bearbeitungsroboterachse (5) integriert ist.

3. Bearbeitungsroboter nach einem der Ansprüche 1 bis 2, **dadurch gekennzeichnet, dass** der Eintritt (4) des Kopplungsmittels (3) an einer Seite (7) der mittleren Bearbeitungsroboterachse (5) so angeordnet ist, dass das Kopplungsmittel (14) durch die Bewegung des Bearbeitungsroboterarms (10) nur eine geringe Bewegung erfährt.

4. Bearbeitungsroboter nach einem der Ansprüche 1 bis 3, **dadurch gekennzeichnet, dass** der Eintritt (4) des Kopplungsmittels (14) nahe an dem Beginn der Bearbeitungsoboterachse (5) angeordnet ist, insbesondere in einem Ellbogenbereich eines Knickarmroboters.

5. Bearbeitungsroboter nach einem der Ansprüche 1 bis 4, **dadurch gekennzeichnet, dass** an dem laserseitigen Ende (13) des Kopplungsmittels (14) ein Spiegel/ein Spiegelpaar und an dem achsenseitigen Ende (11) des Kopplungsmittels (14) ein Spiegel/ein Spiegelpaar vorgesehen ist.

6. Bearbeitungsroboter nach einem der Ansprüche 1 bis 5, **dadurch gekennzeichnet, dass** im Bereich des Bearbeitungsroboterkopfes (6) des Bearbeitungsroboters (9) ein Scanner (18), insbesondere Hochleistungsscanner eingesetzt ist.

7. Bearbeitungsroboter nach einem der Ansprüche 1 bis 6, **dadurch gekennzeichnet, dass** er ein Gewicht von ungefähr 300 kg aufweist, wobei der Laser insbesondere ein Gewicht von etwa 32 kg aufweist und/oder ein großes Verhältnis von Arbeitsbereich zu Standfläche, insbesondere etwa 3 zu 1.

8. Bearbeitungsroboter nach einem der Ansprüche 1 bis 7, **dadurch gekennzeichnet, dass** ein Trichtermittel (17) für die Absaugung im vorderen Bereich (20) des Bearbeitungsroboterkopfes (6) vorgesehen ist und/oder eine Wechseleinrichtung für das Düsenmittel (19) mit einem durchfahrenden System am Bearbeitungsroboterkopf (6) vorgesehen ist und/oder das Düsenmittel (19) drehbar eingerichtet ist.

9. Verfahren zur Bearbeitung eines Werkstücks unter Verwendung eines sechsachsigen Bearbeitungsroboters (1) zur Bearbeitung von Werkstücken mit einem Laserstrahl, wobei ein Bearbeitungslaser (9), insbesondere eine CO2 Bearbeitungslaser (9), einen Laserstrahl (2) erzeugt, wobei die Laserleistung zwischen 60 W und 300 W ist, und wobei der Laserstrahl (2) über Umlenkungsmittel im Wesentlichen entlang einer Längsachse (3) des Bearbeitungsroboters (1) über ein angelenktes Kopplungsmittel (14) in einen Eintritt (4) in eine mittlere Bearbeitungsroboterachse (5) bis zu einem Bearbeitungsroboterkopf (6) mit einem Laserbearbeitungswerkzeug, insbesondere mit einem Düsenmittel (7) um einen Ausgangsbereich (8) des Laserstrahls (2) herum, geleitet wird,
**dadurch gekennzeichnet, dass**
der Bearbeitungslaser (9) zur Erzeugung des Laserstrahls (2) in einem Bearbeitungsroboterarm (10) der mittleren Bearbeitungsroboterachse (5) integriert ist, der im Wesentlichen ein Carbongehäuse (11) umfasst, insbesondere daraus besteht, wobei das Carbongehäuse (11) ein vollständiges oberes Gehäuse (11) des Bearbeitungsroboterarms (10) aus Carbon mit entsprechenden Anbindungsstellen aus Aluminium ist, insbesondere unter Verwendung einer der Vorrichtungen nach Anspruch 1 bis 8

## Claims

1. Six-axis machining robot (1) for machining workpieces using a laser beam, with deflecting means, a coupling means (14), a machining robot head (6), a laser machining tool, especially with a nozzle means (7), and a machining laser, especially a CO₂ machining laser, for producing a laser beam (2), where the laser power is between 60 W and 300 W, wherein the laser beam (2) is to be directed, by deflecting means, substantially along a longitudinal axis (3) of the machining robot (1) via an articulated coupling means (14) into an inlet (4) into a central machining robot axis (5) and to a machining robot head (6) comprising a laser machining tool around an output region (8) of the laser beam (2), **characterized by** that the machining laser (9) for generating the laser beam (2) is integrated into a machining robot arm (10) of the central machining robot axis (5), which essentially comprises a carbon housing (11), in particular consists of a carbon housing (11), whereas the carbon housing (11) is a complete upper outer housing (11) of the robot arm (10) made of carbon with appropriate attachments made of aluminium.

2. Machining robot according to claim 1, **characterized in that** the machining robot arm (10) with the machining laser (9) is integrated into a third or fourth machining robot axis (5).

3. Machining robot according to one of claims 1 to 2, **characterized in that** the inlet (4) of the coupling means (3) is arranged on one side (7) of the central machining robot axis (5) such that the coupling means (14) experiences only a slight movement due to the movement of the machining robot arm (10).

4. Machining robot according to one of claims 1 to 3, **characterized in that** the inlet (4) of the coupling means (14) is arranged close to the beginning of the machining axis (5), in particular in an elbow region of an articulated arm robot.

5. Machining robot according to one of claims 1 to 4, **characterized in that** a mirror/a mirror pair is provided at the laser situated end (13) of the coupling means (14) and a mirror/a mirror pair is provided at the axial end (11) of the coupling means (14).

6. Machining robot according to one of claims 1 to 5 **characterized in that** a scanner (18), in particular a high-performance scanner, is used in the region of the machining robot head (6) of the machining robot (9).

7. Machining robot according to one of claims 1 to 6 **characterized in that** it has a weight of approximately 300 kg, the laser in particular having a weight of approximately 32 kg and/or a large ratio of working area to standing area, in particular approximately 3 to 1.

8. Machining robot according to one of claims 1 to 7, **characterized in that** a funnel means (17) is provided for the extraction in the front region (20) of the machining robot head (6) and/or a changing device for the nozzle means (19) with a traversing system is provided on the machining robot head (6) and/or the nozzle means (19) is arranged rotatably.

9. Method for machining a workpiece using a machining robot (1) for machining workpieces with a laser beam, in particular a machining robot having six axis, wherein the laser beam (2) is directed in particular by deflection means substantially along a longitudinal axis (3) of the machining robot (1) via an articulated coupling means (14) into an inlet (4) into a central machining robot axis (5) up to a machining robot head (6) comprising a laser machining tool, in particular with a nozzle means (7) around an output region (8) of the laser beam (2), the machining laser (9) for generating the laser beam (2) being integrated in a machining robot arm (10) of the central machining robot axis (5), which substantially comprises a carbon housing (11), in particular consisting thereof, in particular using one of the devices according to claim 1 to 8.

## Revendications

1. Robot d'usinage à six axes (1) pour l'usinage de pièces au moyen d'un faisceau laser, d'un agent de déviation, d'un agent de couplage (14), d'une tête de robot d'usinage (6), d'un outil d'usinage laser, notamment d'un agent de buse (7), et d'un laser d'usinage, notamment un laser d'usinage à CO2, pour la génération d'usinage s (2), où la puissance laser est comprise entre 60 W et 300 W, le faisceau laser (2) passant par le réorientateur essentiellement le long d'un axe longitudinal (3) du robot d'usinage (1) passant par le couplage incliné (14) dans une entrée (4) dans un axe central du robot d'usinage (5) jusqu'à la tête du robot d'usinage (6) avec: de faire tourner l'outil d'usinage laser autour d'une zone de sortie (8) du faisceau laser (2), **caractérisé par le fait que** le laser d'usinage (9) pour produire le faisceau laser (2) est intégré dans un bras de robot d'usinage (10) de l'axe moyen du robot d'usinage (5) comprenant essentiellement un boîtier en carbone (11), notamment: le boîtier en carbone (11) est un boîtier extérieur supérieur (11) complet du bras du robot (10) en carbone avec les points de fixation correspondants en aluminium.

2. Robot d'usinage selon la revendication 1, **caractérisé par le fait que** le bras du robot d'usinage (10) est intégré au laser d'usinage (9) dans un troisième ou quatrième axe du robot d'usinage (5).

3. Robot d'usinage selon l'une des revendications 1 à 2, **caractérisé par le fait que** l'entrée (4) du produit de couplage (3) d'un côté (7) de l'axe médian du robot d'usinage (5) est disposée de telle sorte que le produit de couplage (14) ne subisse qu'un faible mouvement du bras du robot d'usinage (10).

4. Robot d'usinage selon l'une des revendications 1 à 3, **caractérisé par le fait que** l'entrée (4) du produit de couplage (14) est située à proximité du début de l'axe du robot d'usinage (5), en particulier dans une zone du coude d'un robot à bras coulissants.

5. Robot d'usinage selon l'une des revendications 1 à 4, **caractérisé par** la présence d'un miroir/paire de miroirs à l'extrémité laser (13) du produit de couplage (14) et d'un miroir/paire de miroirs à l'extrémité axiale (11) du produit de couplage (14).

6. Robot d'usinage selon l'une des revendications 1 à 5, **caractérisé par** l'utilisation d'un scanner (18), notamment d'un scanner haute performance, dans la zone de la tête du robot d'usinage (6) du robot d'usinage (9).

7. Robot d'usinage selon l'une des revendications 1 à 6, **caractérisé par** un poids d'environ 300 kg, le laser ayant en particulier un poids d'environ 32 kg et/ou un rapport élevé entre la surface de travail et la surface de travail, en particulier environ 3 pour 1.

8. Robot d'usinage selon l'une des revendications 1 à 7, **caractérisé par le fait qu'**un entonnoir (17) est prévu pour l'aspiration dans la partie antérieure (20) de la tête du robot d'usinage (6) et/ou qu'un dispositif de remplacement est prévu pour le produit d'usinage (19) avec un système de passage sur la tête du robot d'usinage (6) et/ou la buse moyen (19) est équipé d'un dispositif rotatif.

9. Procédé d'usinage d'une pièce à usiner au moyen d'un robot d'application à six axes (1) pour l'usinage de pièces par un faisceau laser, dans lequel un laser d'usinage (9), en particulier un laser d'usinage à CO₂ (9), produit un faisceau laser (2) dont la puissance est comprise entre 60 W et 300 W et où le faisceau laser (2) passe par la déviation Moyens essentiellement le long d'un axe longitudinal (3) du robot d'usinage (1) par un agent de couplage incliné (14) dans une entrée (4) dans un axe central du robot d'usinage (5) jusqu'à une tête de robot d'usinage (6) avec un outil d'usinage laser, notamment avec un agent de buse (7) autour d'une zone de sortie (8) du laser se **caractérise par le fait que** le laser d'usinage (9) pour produire le faisceau laser (2) est intégré dans un bras de robot d'usinage (10) de l'axe médian du robot d'usinage (5) comprenant essentiellement un boîtier en carbone (11), composé notamment d'un boîtier en carbone (11), dont le boîtier en carbone (11) est entièrement supérieur, le boîtier (11) du bras du robot d'usinage (10) est en carbone avec les points de fixation correspondants en aluminium, notamment en utilisant l'un des dispositifs selon les revendications 1 à 8.
